# EUROPEAN PATENT SPECIFICATION

(11) **EP 0 472 613 B1**
(45) Date of publication and mention of the grant of the patent: **02.03.1994**
(21) Application number: 90908305.7
(22) Date of filing: 03.05.1990
(51) Int. Cl.: B64F 1/12

(54) **LANDING SYSTEM FOR A HELICOPTER ON BOARD A VESSEL**
LANDUNGSSYSTEM FÜR HELIKOPTER AUF EIN SCHIFF
SYSTEME D'ATTERRISSAGE POUR HELICOPTERE A BORD D'UN NAVIRE

(30) Priority: 03.05.1989 NL 8901137
(43) Date of publication of application: 04.03.1992
(73) Proprietor: DE ROTTERDAMSCHE DROOGDOK MAATSCHAPPIJ B.V., NL-3000 AX Rotterdam (NL)
(72) Inventor: WOLTERS, Henk Rijnhold, NL-2611 NE Delft (NL); REIMERING, Wilhelm Robert Marie, NL-1181 KC Amstelveen (NL)
(74) Representative: de Bruijn, Leendert C.
(86) International application number: NL9000062
(87) International publication number: WO9013480

(56) References cited:
- GB-A- 923 864
- US-A- 2 403 456
- US-A- 4 319 722

## Description

The invention relates to a landing system for landing, moving and stationing a helicopter on a vessel, which system comprises a landing deck mounted on the vessel, said deck being provided with an anchorage grid consisting of a large number of openings separated from one another by bridges and a harpoon device fitted or to be fitted in the helicopter, said harpoon device being capable of being extended downwards, when the helicopter is landing on the deck, in order to enter one of the openings in the anchorage grid to anchor the landed helicopter with respect to the deck, and means for towing the helicopter to a parking position, the harpoon device being provided with essentially barb-like elements which are capable of being folded out in the radial direction and which, in the folded-out state, are able to engage behind the bridges forming the boundaries of an opening in the anchorage grid.

Such a system is at present fairly generally used, in particular on board naval vessels, the anchoring of the landed helicopter on the landing deck by means of the harpoon device being necessary since the helicopter could be thrown off the landing deck by violent sea movements transmitted to the vessel.

US-A- 2403456 discloses an aircraft hold-down system in which the aircraft carries an extendable harpoon device provided with at least one pair of oppositely disposed barb-like elements which are spring-biased into a folded-out state and, in this state, are capable to engage the undersurface of an anchorage grid having a large number of openings separated from one another by bridges, the harpoon device being capable to enter one of these openings.

GB-A-923864 discloses an aircraft ground handling equipment in which the landing deck comprises a series of rails layed parallel on the deck and the aircraft has a retractable harpoon which has extendable barbs which, in the extended state, engage with the undersides of the heads of a pair adjacent rails.

US-A-4319722 discloses a landing system for landing, moving and stationing a helicopter on a vessel in which, after it has landed and has been temporarily anchored with respect to a deck grid by means of an extendable harpoon device, the helicopter carrying said harpoon device is positioned on a traverser carrying a grid into which the harpoon device is inserted after having been removed from the deck grid. The combined helicopter and traverser are then moved to a hangar or parking position.

This system is rather complicated and requires that personel are to proceed to the landing deck, which is very undesirable since the personel are then exposed to all kinds of dangers.

The object of the invention is to provide a landing system which does not have this disadvantage.

This object is achieved in that it has been found that a landed helicopter of the type mentioned can be towed essentially from any landing position to any other position and be guided in the process by arranging for a force to act at a point in the longitudinal centre line of the helicopter so that, since the harpoon device is located at such a point, the anchored helicopter can be towed from the landing position to a parking position by moving the anchorage grid.

Since the harpoon device is provided, in the known landing system, known from US-A-4319722 with one claw-type element which engages during anchoring around only one boundary bridge of the opening into which the harpoon device is inserted, said bridge would be too heavily loaded in the system according to the invention when the helicopter is being towed to the parking position.

Therefore, the harpoon device of the landing system according to the invention is provided with a number of essentially barb-like elements which are arranged symmetrically around the centre line of the harpoon device in the folded-out state and are capable to engage behind the bridges forming the boundaries of an opening in the grid in a manner such that all the bridges forming the boundaries of said opening are subjected to a load, the harpoon device being provided with a pressure ring which can be extended in the downward direction to clamp the grid between said ring and the folded-out barbs. As a result of this, use can be made of a grid having a standard opening shape and bridge shape, with the result that helicopters which are equipped with a conventional harpoon device are also able to land, whereas by the pressure ring the loading of the frame of the helicopter can be reduced during towing.

Preferably the barb-like elements are fitted on a spear-like device which is mounted in a housing, said elements being held in a non-folded-out state by means of elastic devices and a sliding device being present which is linked to the piston rod of a piston- and cylinder-unit fitted in the housing and which is provided with run-on surfaces which, when the piston rod is pushed outwards, are able to come into contact with the ends of the barb-like elements, as a result of which the latter are swung outwards into the said folded-out state.

Advantageously the pressure ring is linked to, or forms a single entity with, an axially slidable sheath provided around the housing, an essentially sealed annular chamber which is bounded by a shoulder formed on the sheath at the inside and which can be connected to a source of pressurized fluid being formed between the outside surface of the housing and the inside surface of the sheath so that a force directed towards the free end of the spear-like device is exerted on the sheath by introducing the pressurized fluid into said chamber.

In an advantageous embodiment of the system according to the invention, the grid is mounted on or in a plate-type device which is situated essentially in the plane of the landing deck and which can be moved by means of a drive system along a straight path parallel to itself, the grid itself being capable of executing, by means of guiding means, a translation with respect to the plate-type device in the direction perpendicular to the direction of movement of the device or being capable of being rotated with respect to the plate-type device.

The invention is explained in more detail with reference to the drawing, wherein
Figure 1 shows diagrammatically the parking of a helicopter,
Figure 2 shows diagrammatically a movable anchorage grid according to the landing system of the invention,
Figure 3 shows a second embodiment of a movable anchorage grid according to the landing system of the invention,
Figure 4 shows a section through the anchorage grid on an enlarged scale, and
Figures 5 and 6 shows a harpoon device according to the invention in longitudinal section. Figure 5a being a section along the line Va-Va.

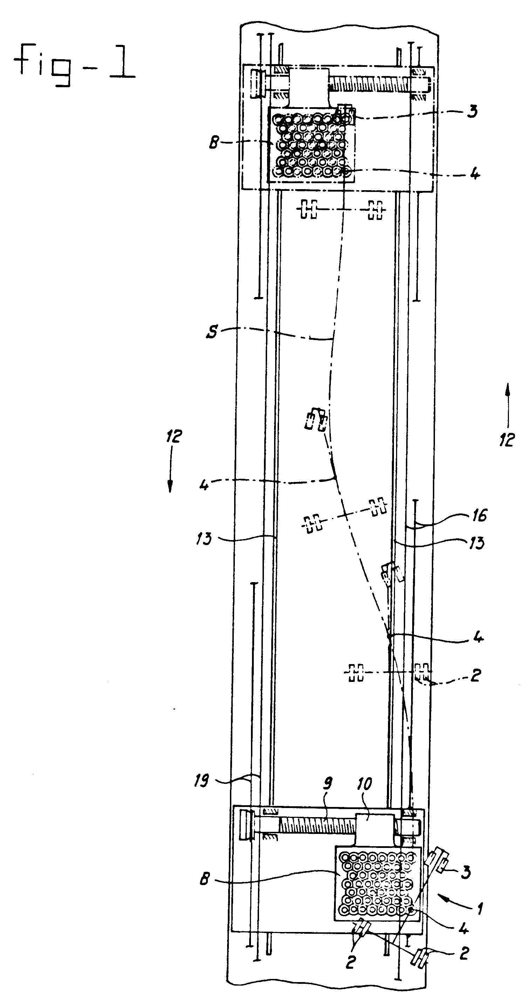

As shown in Figure 1, a helicopter 1 having the side wheels 2 and the forked rear wheel 3 can be towed from the lowermost arbitrary position indicated by broken lines to a position shown at the top in the figure by arranging for a towing force and a guiding force perpendicular thereto to act at the point 4, the point 4 describing the path S.

At the position of the point 4, the helicopter is provided with a harpoon device.

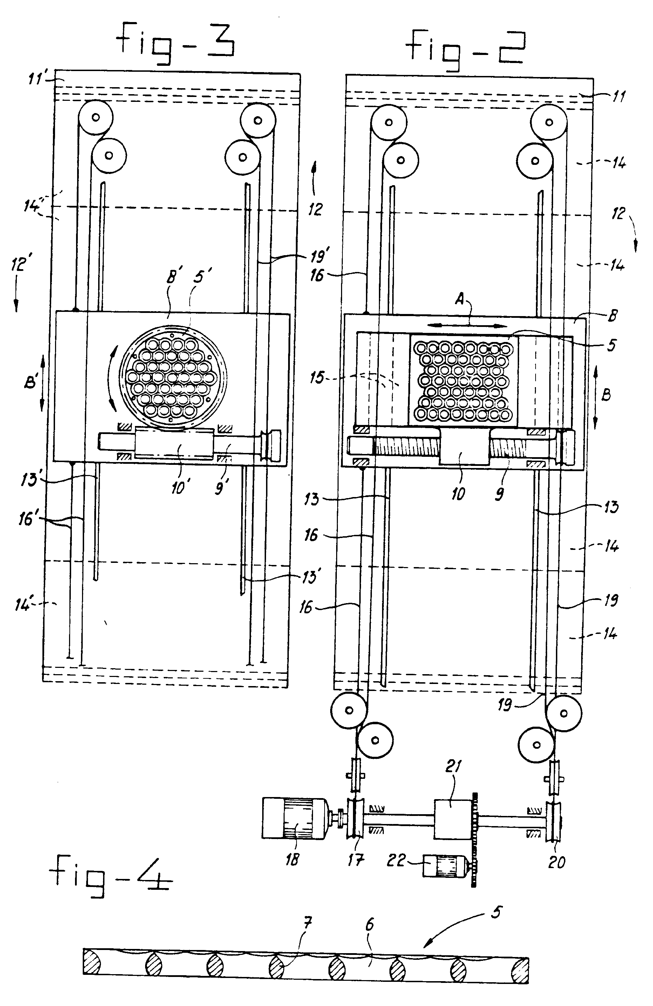

As shown in Figures 2 and 4, the anchorage grid 5 is provided with a large number of round openings 6 which are bounded or separated from one another by bridges 7. The anchorage grid 5 is mounted in a frame 8 so as to move in accordance with the double arrow A, the movement of the grid 5 being capable of being effected by means of a linear movement mechanism, for example the threaded spindle 9 which is rotatably mounted on the frame 8 and with which the plate 5 is engaged by means of the threaded sleeve 10. The spaces at either side of the grid 5 are at the same time always sealed by filler panels 15 which travel concomitantly with the grid.

The frame 8 can be moved in accordance with the double arrow B inside a channel-type recess 11 which is provided in the landing deck 12, the plate 8 being guided by rails 13. The frame 8 is coupled to automatically concomitantly travelling filler panels 14 so that the channel 11 is always sealed at the top.

Like the panels 15, the tiller panels 14 are of the type which is used to seal hatchway openings in a middle deck on board ships, said panels being situated behind one another in one plane and adjacent to one another in the position completely sealing the opening and being situated beneath one another in a somewhat tilted position in the position completely opening the opening at one of the transverse edges of the opening.

The plate 8 can be moved back and forth in accordance with B by means of the cable 16 which is wound around the capstan 17 which can be driven by the motor 18.

To effect the translation A of the grid 5, the threaded spindle 9 is caused to rotate by means of the cable 19 which is wound round the capstan 20 which can be caused to rotate by means of the planetary gearbox 21, the planetary gearbox being driven by the motor 22.

In the embodiment according to Figure 3, use is made of a round anchorage grid 5' which is rotatably received in a plate 8' which can be moved back and forth inside a channel-type recess 11' by means of the cable 16' according to the double arrow B' in the same manner as shown for the frame 8 in Figure 2, said recess being provided in the landing deck 12', the plate being guided by the rails 13'.

A rotatable shaft 9' with a worm 10' permanently mounted thereon is provided on the plate 8', which worm is enmeshed with the grid 5' which is constructed as a worm wheel so that the grid 5' can be rotated by causing the shaft 9' to rotate. The rotation of the shaft 9' is effected by means of the cable 19' in the same manner as shown for the threaded spindle 9 in Figure 2.

Here again the plate 8' is coupled to automatically concomitantly travelling filler panels 14' so that the channel 11' is always sealed at the top.

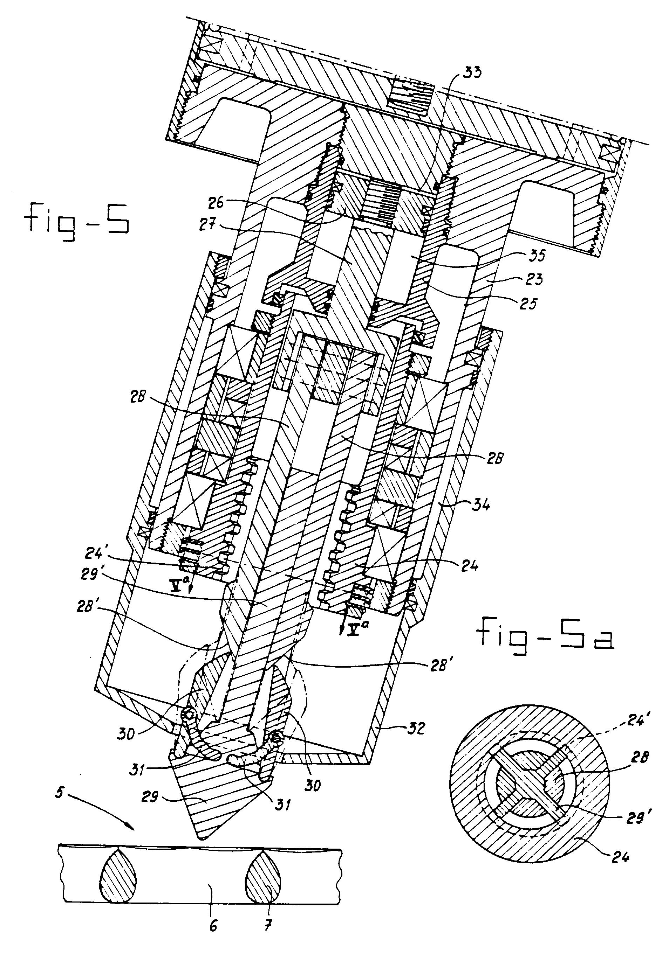

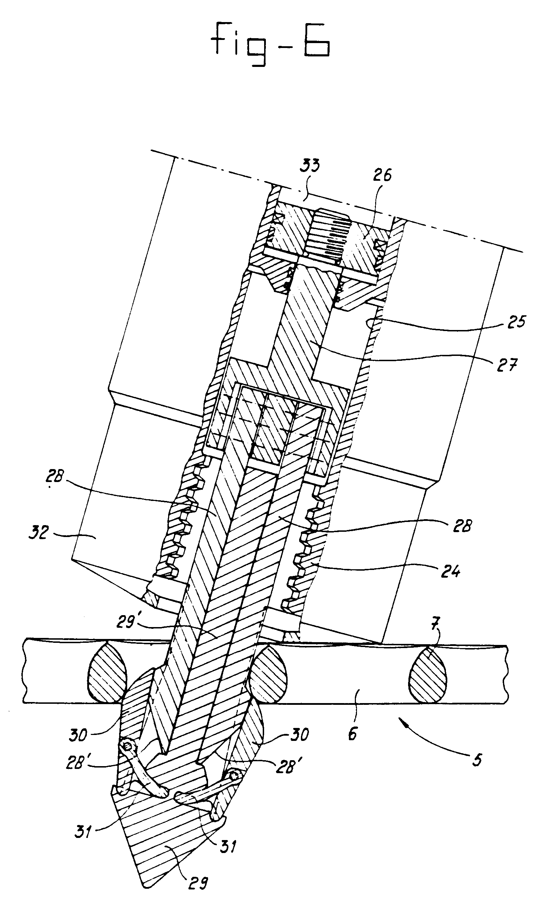

As shown in Figures 5 and 6, the harpoon device comprises a housing 23 which is attached at its top end by means of a telescopic extension and retraction system, which is not shown, to the helicopter at the bottom thereof. A sleeve-type body 24 is rotatably received inside said housing 23. There is furthermore a cylinder 25 in which a piston 26 is able to move back and forth, said piston being linked to a piston rod 27 which carries a sliding device comprising four leg-type elements 28, each leg-type element 28 having a run-on surface 28' at its bottom end. The sleeve 24 furthermore carries, by means of the screw threads 24', the cross-shaped head 29' of a spear-like device 29 which is provided with four barb-like elements 30 which can be folded out and which are held in the non-folded-out state by means of elastic devices 31. A pressure ring 32 is furthermore provided around the housing 23.

Starting from the state shown in Figure 5, the harpoon device is forced downwards out of the helicopter by means of the telescopic extension system mentioned, the spear-like device 29 engaging in an opening 6 of the landing grid 5 and the pressure ring 32 which comes to rest against the bridges 7 during this operation being forced upwards with respect to the housing 23. A pressurized fluid is then admitted, via channels which are not shown, into the space 33 above the piston 26, for example by a signal emitted by the pressure ring, as a result of which the sliding device 28 is lowered, the leg-type elements sliding between the ribs of the cross-shaped head 29' of the spear-like device 29. When this happens, the run-on surfaces 28' come into contact with the ends of the barb-like elements 30, as a result of which said elements are swung outwards and engage behind the bridges 7 of the opening 6 in the grid 5, as shown in Figure 6. A pressurized fluid is then introduced into the chamber 34 between the pressure ring 32 and the housing 23, as a result of which a downwardly directed force is exerted on the pressure ring 32, with the result that the harpoon device is brought to a virtually vertical position and the grid 5 is clamped between the pressure ring 32 and the folded-out barbs 30.

When the harpoon device is released, the pressure in the chamber 34 is removed and a pressurized fluid is introduced into the space 35 beneath the piston 26, as a result of which the sliding device 28 moves upwards with the result that the barb-like elements 30 are released from the bridges 27 because they are folded inwards as a result of the action of the elastic devices 31. Finally, the entire harpoon device is again brought into the starting position from the helicopter by means of the telescopic retraction system.

A harpoon device according to the landing system of the invention can also be constructed in a manner such that it can be pulled, by means of a pilot cable to be operated from the helicopter, into a hollow pin-like device projecting downwards from the bottom of the helicopter and can be secured therein so that the harpoon device essentially forms a separate component which is not permanently connected to the helicopter.

## Claims

1. Landing system for landing, moving and stationing a helicopter on a vessel, which system comprises a landing deck mounted on the vessel, said deck being provided with an anchorage grid (5) consisting of a large number of openings (6) separated from one another by bridges (7) and a harpoon device fitted or to be fitted in the helicopter, said harpoon device being capable of being extended downwards, when the helicopter is landing on the deck, in order to enter one of the openings in the anchorage grid to anchor the landed helicopter with respect to the deck, and means for towing the helicopter to a parking position, the harpoon device being provided with essentially barb-like elements (30) which are capable of being folded out in the radial direction and which, in the folded-out state, are able to engage behind the bridges (7) forming the boundaries of an opening in the anchorage grid characterized in that said barb-like elements (30) are arranged symmetrically around the centre line of the harpoon device so that they, in the folded out state, are able to engage behind said bridges in a manner such that all the bridges forming the boundary of said opening are subjected to a load, the harpoon device being provided with a pressure ring (32) which can be extended in the downward direction to clamp the grid (5) between said ring and the folded-out barb-like elements.

2. System according to Claim 1, characterized in that the barb-like elements (30) are fitted on a spear-like device (29) which is mounted in a housing (23), said elements being held in a non-folded-out state by means of elastic devices (31) and a sliding device (28) being present which is linked to the piston rod (27) of a piston- and-cylinder unit (25, 26) fitted in the housing (23) and which is provided with run-on surfaces (28') which, when the piston rod is pushed outwards, are able to come into contact with the ends of the barb-like elements (30), as a result of which the latter are swung outwards into the said folded-out state.

3. System according to Claim 2, characterized in that the pressure ring (32) is linked to, or forms a single entity with, an axially slidable sheath provided around the housing (23), an essentially sealed annular chamber (34) which is bounded by a shoulder formed on the sheath at the inside and which can be connected to a source of pressurized fluid being formed between the outside surface of the housing and the inside surface of the sheath so that a force directed towards the free end of the spear-like device is exerted on the sheath by introducing the pressurized fluid into said chamber.

4. System according to Claims 2 or 3, characterized in that four barb-like elements (30) are provided and the sliding device (28) comprises four leg-type elements (28) which are each provided with a run-on surface (28') mentioned, the spear-like device (29) having a shaft (29') which is cross-shaped in section and along which the leg-type elements are guided.

5. System according to Claims 1-4, characterized in that the anchorage grid (5, 5') is movably mounted in the plane of the landing deck and means (9, 10) are available for moving the grid in a manner such that a towing and guiding force can be exerted on the anchored helicopter during the operation by means of the harpoon device anchored in the grid.

6. System according to Claim 5, characterized in that the grid (5, 5') is mounted on or in a plate-type device (8, 8') which is situated essentially in the plane of the landing deck and which can be moved by means of a drive system (16, 16') along a straight path parallel to itself, the grid being capable of executing, by means of guiding means ( 9, 10; 9', 10'), a translation with respect to the plate-type device in the direction perpendicular to the direction of movement of the device or being capable of being rotated with respect to the plate-type device.

## Patentansprüche

1. Landesystem zum Landen, Bewegen und Stationieren eines Hubschraubers auf einem Schiff, mit einem auf dem Schiff befestigten Landedeck, das mit einem Verankerungsgitter (5) versehen ist, das aus einer Anzahl von Öffnungen (6) besteht, die voneinander durch Brücken (7) getrennt sind, und mit einer in dem Hubschrauber angebrachten oder anzubringenden Harpunenvorrichtung, die nach unten ausgefahren werden kann, wenn der Hubschrauber auf dem Deck landet, damit sie in eine der Öffnungen in dem Verankerungsgitter eindringt, um den landenden Hubschrauber in bezug auf das Deck zu verankern, und mit Mitteln zum Schleppen des Hubschraubers zu einer Parkposition, wobei die Harpunenvorrichtung mit im wesentlichen widerhakenartigen Elementen (30) versehen ist, die in radialer Richtung entfaltet werden können und die im entfalteten Zustand hinter die Brücken (7) greifen können die die Abgrenzungen einer Öffnung in dem Verankerungsgitter bilden, dadurch gekennzeichnet, daß die widerhakenartigen Elemente (30) symmetrisch um die Mittellinie der Harpunenvorrichtung angeordnet sind, so daß im entfalteten Zustand in der Weise hinter die Brücken greifen können, daß alle die Abgrenzung der Öffnung bildenden Brücken einer Belastung ausgesetzt werden, wobei die Harpunenvorrichtung mit einem Druckring (32) versehen ist, der in Abwärtsrichtung ausgefahren werden kann, um das Gitter (5) zwischen dem Ring und dem entfalteten widerhakenartigen Elementen festzuklemmen.

2. System nach Anspruch 1, dadurch gekennzeichnet, daß die widerhakenartigen Elemente (30) an einer speerartigen Vorrichtung (29) befestigt sind, die in einem Gehäuse (23) angebracht ist, wobei die Elemente mittels elastischer Vorrichtungen (31) im nichtentfalteten Zustand gehalten werden, und daß eine Schiebevorrichtung (28) vorgesehen ist, die mit der Kolbenstange (27) einer in dem Gehäuse (23) eingebauten Kolben- und Zylindereinheit (25, 26) verbunden ist und mit Auflaufflächen (28') versehen ist, die dann, wenn die Kolbenstange nach außen geschoben wird, mit den Enden der widerhakenartigen Elemente (30) in Kontakt kommen können, wodurch letztere in den entfalteten Zustand nach außen geschwenkt werden.

3. System nach Anspruch 2, dadurch gekennzeichnet, daß der Druckring (32) mit einem axial um das Gehäuse (23) vorgesehenen verschiebbaren Mantel verbunden ist oder damit eine Einheit bildet, wobei eine im wesentlichen dichte Ringkammer (34), die von einem an der Innenseite des Mantels gebildeten Ansatz begrenzt ist und mit einer Druckmittelquelle verbunden werden kann, zwischen der Außenfläche des Gehäuses und der Innenfläche des Mantels gebildet ist, so daß durch Einführen des Druckmittels in die Kammer eine gegen das freie Ende der speerartigen Vorrichtung gerichtete Kraft auf den Mantel ausgeübt wird.

4. System nach Anspruch 2 oder 3, dadurch gekennzeichnet, daß vier widerhakenartige Elemente (30) vorgesehen sind und daß die Schiebevorrichtung (28) vier schenkelartige Elemente (28) aufweist, die jeweils an einer erwähnten Auflauffläche (28') vorgesehen sind, wobei die speerartige Vorrichtung (29) einen Schaft (29') aufweist, der im Schnitt kreuzförmig ist und entlang dem die schenkelartigen Elemente geführt sind.

5. System nach den Ansprüchen 1 bis 4, dadurch gekennzeichnet, daß das Verankerungegitter (5, 5') in der Ebene des Landedecks beweglich angebracht ist und daß Mittel (9, 10) zur Verfügung stehen, um das Gitter so zu bewegen, daß eine Schlepp- und Lenkkraft auf den verankerten Hubschrauber während der Operation mittels der im Gitter verankerten Harpunenvorrichtung ausgeübt werden kann.

6. System nach Anspruch 5, dadurch gekennzeichnet, daß das Gitter (5, 5') auf oder in einer plattenartigen Vorrichtung (8, 8') angebracht ist, die sich im wesentlichen in der Ebene des Landedecks befindet und die mit Hilfe eines Antriebsystems (16, 16') längs eines geraden Wegs parallel zu sich selbst bewegt werden kann, wobei das Gitter mit Hilfe von Führungsmitteln (9,10,9,10') eine Translation bezüglich der plattenartigen Vorrichtung in der senkrecht zur Bewegungsrichting der Vorrichtung verlaufenden Richtung ausführen kann oder bezüglich der plattenartigen Vorrichtung gedreht werden kann.

## Revendications

1. Système d'atterrissage pour faire atterrir, déplacer et stationner un hélicoptère sur un navire, système qui comprend un pont d'atterrissage monté sur le navire, ledit pont étant pourvu d'une grille d'ancrage (5) consistant en un grand nombre d'orifices (6) séparés les uns des autres par des ponts (7), un dispositif de harpon fixé ou à fixer dans l'hélicoptère, ledit dispositif de harpon pouvant être étendu vers le bas quand l'hélicoptère atterrit sur le pont pour pénétrer dans l'un des orifices de la grille d'ancrage afin d'ancrer par rapport au pont l'hélicoptère qui a atterri, et un moyen pour touer l'hélicoptère vers une position de stationnement, le dispositif de harpon étant pourvu d'éléments (30) essentiellement en forme d'ardillons qui peuvent être dépliés dans la direction radiale et qui, à l'état déplié, peuvent s'engager derrière les ponts (7) qui forment les limites d'un orifice de la grille d'ancrage, **caractérisé** en ce que lesdits éléments (30) en forme d'ardillons sont disposés symétriquement autour de l'axe central du dispositif de harpon de sorte qu'à l'état déplié ils peuvent s'accrocher derrière lesdits ponts d'une manière telle que tous les ponts formant la limite dudit orifice sont soumis à un effort, le dispositif de harpon étant pourvu d'une bague de pression (32) qui peut être étendu vers le bas pour pincer la grille (5) entre ladite bague et les éléments en forme d'ardillons dépliés.

2. Système selon la revendication 1, **caractérisé** en ce que les éléments (30) en forme d'ardillons sont fixés sur un dispositif (29) en forme d'épieu qui est monté dans un boîtier (23), lesdits éléments étant maintenus à l'état replié au moyen de dispositifs élastiques (31), et en ce qu'il y a un dispositif coulissant (28) qui est relié à la tige de piston (27) d'un ensemble piston/cylindre (25, 26) logé dans le boîtier (23) et qui est pourvu de surfaces de glissement (28') qui, quand la tige de piston est poussée vers l'extérieur, peuvent venir en contact avec les extrémités des éléments (30) en forme d'ardillons, en conséquence de quoi ces derniers sont expulsés vers l'extérieur pour venir dans l'état déplié.

3. Système selon la revendication 2, **caractérisé** en ce que la bague de pression (32) est liée à un fourreau coulissant axialement placé autour du boîtier (23), ou constitue une seule entité avec lui, une chambre annulaire (34) essentiellement étanche, qui est limitée par un épaulement formé à l'intérieur sur le fourreau et qui peut être reliée à une source de fluide sous pression, étant formée entre la surface extérieure du boîtier et la surface intérieure du fourreau de sorte qu'une force dirigée vers l'extrémité libre du dispositif en forme d'épieu est exercée sur le fourreau par introduction du fluide sous pression dans ladite chambre.

4. Système selon la revendication 2 ou 3, **caractérisé** en ce qu'il y a quatre éléments (30) en forme d'ardillons et en ce que le dispositif coulissant (28) comprend quatre éléments (28) du type jambes qui sont chacun pourvus d'une surface de glissement (28') mentionnée, le dispositif (29) en forme d'épieu comportant un arbre (29') qui a une section en croix et le long duquel les éléments du type jambes sont guidés.

5. Système selon les revendications 1 à 4, **caractérisé** en ce que la grille d'ancrage (5, 5') est montée de façon mobile dans le plan du pont d'atterrissage et des moyens (9, 10) sont disponibles pour déplacer la grille de manière telle qu'une force de guidage et de touage puisse être exercée sur l'hélicoptère ancré pendant l'opération au moyen du dispositif de harpon ancré dans la grille.

6. Système selon la revendication 5, **caractérisé** en ce que la grille (5, 5') est montée sur ou dans un dispositif (8, 8') du type plateau qui est situé essentiellement dans le plan du pont d'atterrissage et qui peut être déplacé au moyen d'un système d'entraînement (16, 16') le long d'un trajet rectiligne parallèlement à lui-même, la grille pouvant exécuter, grâce à un moyen de guidage (9, 10 ; 9', 10') une translation par rapport au dispositif du type plateau dans la direction perpendiculaire à la direction de déplacement du dispositif ou pouvant être tournée par rapport au dispositif du type plateau.
